# EUROPEAN PATENT APPLICATION

(11) **EP 1 182 442 A2**
(43) Date of publication of application: **27.02.2002**
(21) Application number: 01307125.3
(22) Date of filing: 22.08.2001
(51) Int. Cl.: G01M 13/04

(54) **Bearing vibration diagnostic apparatuses and methods of detecting vibration of bearings**

(30) Priority: 24.08.2000 JP 2000253940
(71) Applicant: Kawasaki Steel Corporation, Kobe-shi, Hyogo 651-0075 (JP)
(72) Inventor: Ono, Rikio, Mizushima Works, Kawasaki Steel Corp., Kurashiki-shi, Okayama 712-8074 (JP); Matsuda, Keiji, Kawasaki Steel Corp., Kurashiki-shi, Okayama 712-8074 (JP); Takata, Shigenobu, Tokyo Head Off., Kawasaki Steel, Chiyoda-ku, Tokyo 100-0011 (JP)
(74) Representative: Stebbing, Timothy Charles

(57) **Abstract**

A diagnostic apparatus and method for diagnosing abnormal vibration of a bearing (10) provided for a rotary shaft (9) of a roller (11), such as one of a series of table rollers, even in a place with no facilities of external power supply. The diagnostic apparatus includes a vibration detector (1) that detects vibration of a bearing (10); a computing unit (2) that executes computation based on data detected by the vibration detector (1) and received as an input signal; a monitoring device (3) that provides a vibration status of the bearing (10) based on an output signal from the computing unit (2); a generator (4) that generates electric power by utilizing rotary motion of the rotary shaft (9) as a motive power source; and a motive power transmitting device that transmits the rotary motion of the rotary shaft (9) to the generator (4). The generated electric power is supplied to the vibration detector (1), the computing unit (2) and the monitoring device (3).

## Description

This invention relates to apparatuses for diagnosing bearings. This invention also relates to methods of detecting vibration of bearings.

A rotary shaft of a roller, such as one of a series of table rollers and conveyor rollers, is supported by a bearing. The roller is driven for rotation by a motor. The bearing serves to not only support the rotary shaft, but also allows its smooth rotation. If the bearing is deformed or worn, the rotary shaft fails to rotate smoothly. Such a condition increases resistance against rotation, thus reducing energy efficiency, and possibly causing seizure or other problems.

It is important to detect abnormalities of bearings at an early stage. To detect abnormalities of bearings, various pieces of equipment, e.g., sensors for detecting vibration of bearings and a computing unit for processing detected data, have been developed.

Electric power must be supplied to operate the sensor and computing unit. The electric power is usually supplied through a feed cable from a power supply unit installed in a factory. Generally, a table roller line comprises a large number of rollers, and in some cases it includes several hundreds of rollers. When sensors and computing units for processing data detected by the sensors are attached to bearings of rotary shafts of all of the rollers, the electric power must be supplied to several hundreds of sensors and computing units. This leads to problems that feed cables are increased in length, wiring is complicated, and the installation cost is increased.

For reducing the length of the feed cable, there is known a method of providing a battery near each bearing and operating the sensor and the computing unit by electric power supplied from the battery. This known method, however, has problems that the battery must be routinely replaced or recharged, and lost production time is required for maintenance of the equipment.

Japanese Unexamined Patent Application Publication No. 60-214098 discloses a telemetering system for measuring various variables of a rotating member. According to this disclosed technique, in consideration of the difficulty in supplying electric power to a rotating member of a rotary drying machine or the like, a generator is disposed within the rotating member. The generator supplies electric power to a transmitting circuit, which converts an analog signal from a sensor into a digital signal and delivers the digital signal to a transmitting antenna. With this disclosed method, however, the electric power for a computing unit disposed on the receiving side must be supplied through a feed cable from a power supply unit installed in a factory. Thus, this technique does not overcome the problems of requiring long feed cables and increased installation cost.

Further, the technique disclosed in the above-cited publication has another problem that the generator is a dedicated generator built in each rotating member, and hence increased cost is required for design and production.

With a view to overcoming the problems mentioned above, this invention can enable diagnosis of bearings for rotary shafts of a large number of rollers, such as table rollers and conveyor rollers, to be made even in a place with no facilities of external power supply. Accordingly, the invention provides a bearing vibration diagnostic apparatus requiring no external power supply. Thus, the invention can be provided inexpensively.

The invention provides a bearing vibration diagnostic apparatus comprising a vibration detector that detects vibration of a bearing supporting a rotary shaft; a computing device or computing unit that executes computation based on data detected by the vibration detector and received as an input signal; a monitoring device that provides a vibration status of the bearing based on an output signal from the computing device; a generator that generates electric power by utilizing rotary motion of the rotary shaft as a motive power source, and supplies the generated electric power to at least the computing device and the monitoring device; and a motive power transmitting device that transmits the rotary motion of the rotary shaft to the generator.

In the invention, preferably, the motive power transmitting device comprises a coupling disposed on the rotary shaft and having a rubber coating, and a rotating member disposed in the generator and contacting the coupling.

The vibration detector is preferably a piezoelectric device that can detect mechanical shock that occurs when a roll or a ball of a bearing, on which a load is imposed, passes a defective portion formed in a race surface of the bearing. That is, preferably, a piezoelectric device is employed to detect mechanical shock (or "shock pulse"), thereby identifying wear of the bearing. This technique is called a vibration diagnostic method. A vibration detector employing a piezoelectric device is commonly referred to as a shock pulse oscillator.

The vibration detector can be a device for detecting vibration in terms of acceleration to carry out abnormality diagnosis of bearings, as disclosed in Japanese Unexamined Patent Application Publication No. 3-221818. Stated otherwise, an acceleration vibration sensor can be used as the vibration detector in the invention.

A diagnostic method of directly measuring vibration and carrying out abnormality diagnosis of a bearing from high-frequency noise in the measured component, as disclosed in Japanese Unexamined Patent Application Publication No. 7-270228, can also be used in the invention. In other words, a vibration sensor may be used as the vibration detector.

Further, it is possible to utilize a device that converts vibration into an electric signal for carrying out abnormality diagnosis, as disclosed in Japanese Unexamined Patent Application Publication No. 54-77189. This related art employs a piezoelectric device as a vibration detector.

This invention also provides methods of detecting vibration of bearings.

Reference will now be made, by way of example, to the accompanying drawings in which:
Fig. 1 is a side view showing an exemplary embodiment of the vibration diagnostic apparatus according to the invention disposed on a bearing;
Fig. 2 is a side view showing another exemplary embodiment of the vibration diagnostic apparatus of the invention disposed on a bearing; and
Fig. 3 is a graph showing transitions of the sound pressure level of a shock pulse.

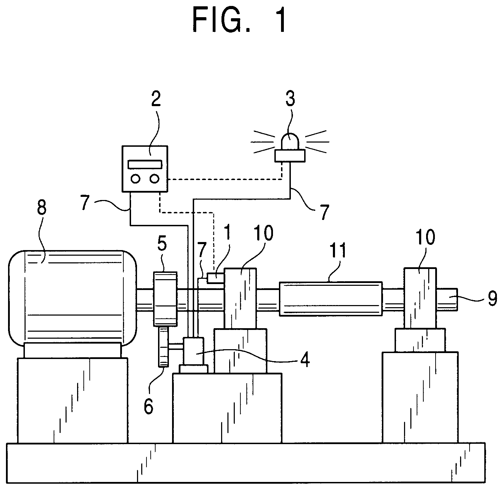

Fig. 1 shows an exemplary embodiment of a vibration diagnostic apparatus of the invention. The apparatus is disposed on a bearing of one of a series of table rollers. A rotary shaft of a motor 8 is coupled to a rotary shaft 9 through a coupling 5, such as a coupling having a rubber coating (called a rubber coupling). The motor 8 drives a table roller 11 for rotation. The rotary shaft 9 is supported by bearings 10, and a vibration detector 1 is attached to each of the bearings 10. Data detected by the vibration detector 1 is transmitted to a computing unit 2. The computing unit 2 executes computation processing of an input signal to produce an output signal. The output signal is transmitted from the computing unit 2 to a monitoring device 3.

It has been conventional that electric power is supplied to the vibration detector 1, the computing unit 2 and the monitoring device 3 through long cables from a power supply unit installed in a factory. In the invention, electric power is supplied to these components from a generator 4.

In the invention, a motive power transmitting device is disposed on the rotary shaft 9 for transmitting a rotating motion of the rotary shaft 9 to the generator 4. As one example of the motive power transmitting device, in Fig. 1, the coupling 5 comprises a rubber coupling having its circumferential surface covered with a rubber coating. A rotating member 6 of the generator 4 is arranged to come into contact with the coupling 5. Thus, the rotation of the coupling 5 is transmitted to the rotating member 6 through the contact between the rotating member 6 and the coupling 5.

When the rotating member 6 is rotated with the coupling 5, the generator 4 generates electric power that is supplied to the vibration detector 1, the computing unit 2 and the monitoring device 3 through respective feed cables 7.

In the vibration diagnostic apparatus of the invention, the electric power supplied to the vibration detector 1, the computing unit 2 and the monitoring device 3 is generated by the generator 4, which utilizes the rotating motion of the rotary shaft 9 to generate the electric power. As compared with the conventional approach of supplying the electric power from a power supply unit installed in a factory, therefore, the length of each feed cable 7 is significantly reduced, thus resulting in a simplified apparatus and easier maintenance work.

In the above-described exemplary motive power transmitting device, the rotating motion of the coupling 5 is transmitted to the rotating member 6 of the generator 4. However, the construction of the motive power transmitting device can be modified in various ways. The generator 4 can be directly attached to an end of the rotary shaft 9 for rotation. Also, a disk-like member other than the coupling 5 can be mounted on the rotary shaft 9, so that rotary motion of the disk-like member is transmitted to the generator 4 as with embodiments employing the coupling 5. Further, the rotating member 6 may be directly pressed against the rotary shaft 9 for transmitting the rotating motion of the rotary shaft 9 to the generator 4. In this case, preferably, a rubber coating is formed on at least one of the contact surfaces of the rotary shaft 9 and the rotating member 6 to ensure reliable transmission of the rotary motion. As an alternative, a belt, a chain or the like can also be used for transmitting the rotating motion of the rotary shaft 9 to the generator 4. The arrangement of contacting the rotating member 6 with the coupling 5, the disk-like member or the rotary shaft 9 for transmitting the rotating motion of the rotary shaft 9 is advantageous because the motive power transmitting device can be installed in a small space and simplified, and the maintenance work becomes easier.

When the voltage, for example, of the electric power supplied to the vibration detector 1, the computing unit 2 and the monitoring device 3 is to be changed, any desired voltage can be obtained by changing the diameter ratio between the rotating member 6 and the coupling 5.

In the invention, a sensor for use as the vibration detector 1 is not limited to any particular sensor. Any conventional sensor can be used. For obtaining an increased capability of detecting vibration of the bearing, however, a shock pulse oscillator is preferably employed because a shock pulse produced by the shock pulse oscillator is highly responsive to wear of the bearing.

Also, in the invention, data processing executed by the computing unit 2 on the data detected by the vibration detector 1 is not limited to any particular processing method. For example, comparing the detected data with the historical data makes it possible to predict the useful life of the bearing. For simplicity, however, a processing method of diagnosing the presence or absence of an abnormality, by comparing the detected data with a preset threshold value, is preferable.

Further, in the invention, the monitoring device 3 is not limited to a particular monitoring device. Any type of monitoring device can be used so long as it is able to represent the output signal from the computing unit 2. For example, any one of a display capable of displaying a message, an indicator for lighting up a lamp, an annunciator for emitting sounds, such as voices or an alarm, and a device including two or more of these functions in a combined manner, can be selected as desired.

Moreover, the monitoring device 3 may be shared by plural sets of vibration diagnostic apparatuses. For example, the vibration detector 1 and the computing unit 2 are provided for each bearing, while outputs of the plural computing units 2 are represented on one monitoring device 3 in a concentrated manner. When the monitoring device 3 issues a warning in the form of characters, illumination, voices, etc. upon the occurrence of any abnormality, the detected data may be checked for each of the computing units 2 to make diagnosis and confirmation per bearing.

Additionally, when a transmitter for transmitting the output signal of the computing unit 2 to a central control computer is provided as a modification in future practical use, the electric power generated by the generator 4 can be supplied to the transmitter as well.

### (Example)

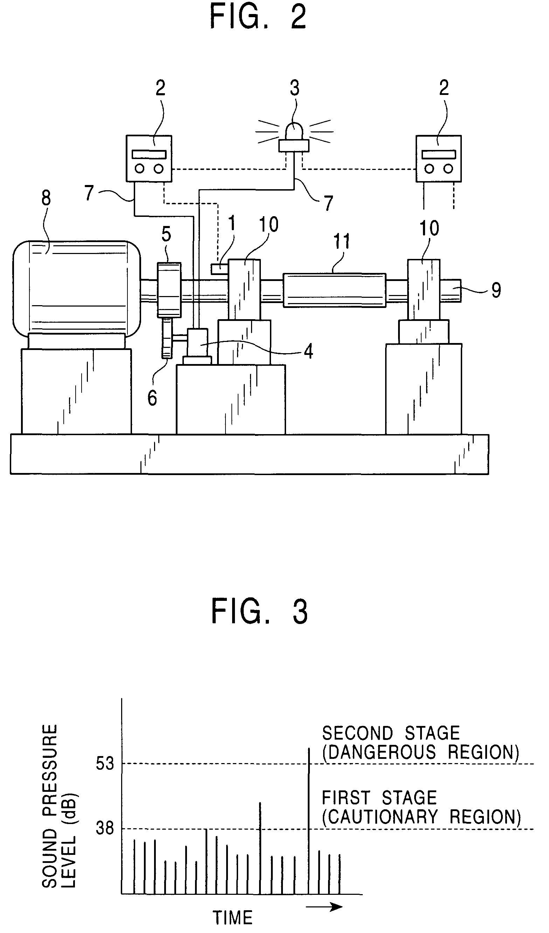

As shown in Fig. 2, a shock pulse oscillator employing a piezoelectric device was disposed, as a vibration detector 1, for each bearing 10 of a series of table rollers 11 arranged along a transport line for steel plates. A rotary shaft of a motor 8 was connected to a rotary shaft 9 of the table roller 11 through a coupling 5 having a rubber coating formed on its circumferential surface. A rotating member 6 mounted beside the motor rotary shaft was arranged to be pressed against the coupling 5. A rotary motion of the rotary shaft 9 was transmitted to a generator 4 through the coupling 5 and the rotating member 6.

The rotational speed of the generator 4 was 1800 revs/min, and the electric power generated by the generator 4 was 110 V at a current of 0.1 A. The generated electric power was supplied to a computing unit 2 and a monitoring device 3 through respective feed cables 7. The consumption power of each of the computing unit 2 and the monitoring device 3 was 5 W. No electric power was required for the vibration detector 1 because it comprised a piezoelectric device. An output of the vibration detector 1 was received by the computing unit 2.

As the vibration detector 1, a piezoelectric device oscillating a shock pulse with a sound pressure level in the range of 20 to 79 dB was employed. The table roller 11 employed herein had a bearing diameter of 400 mm. Data of the sound pressure level (dB) detected by the vibration detector 1 was transmitted to the computing unit 2. As shown in Fig. 3, a threshold value of 38 dB for the first stage and a threshold value of 53 dB for the second stage were set in advance. When the detected sound pressure level (dB) exceeded the threshold value of 38 dB for the first stage, the monitoring device 3 was operated to light up a lamp upon judgment that the bearing life came into a cautionary region. Further, when the detected sound pressure level (dB) exceeded the threshold value of 53 dB for the second stage indicating a dangerous region, the monitoring device 3 was operated to blink a red flash lamp called Patlight. The bearing, which was judged as having reached the second stage, was replaced.

Conventionally, electric power was supplied to the vibration detector 1, the computing unit 2 and the monitoring device 3, which were disposed on the bearing 10 of each table roller 11 in the transport line, through long cables from a power supply unit installed in a factory. Therefore, very long feed cables were required and wiring of these feed cables was complicated.

By contrast, in this Example, the rotating motion of the rotary shaft 9 of each table roller 11 was transmitted to the generator 4, and the generated electric power was supplied to the vibration detector 1, the computing unit 2 and the monitoring device 3. Therefore, the wiring length of each feed cable 7 was very short.

Further, the surface temperature of the coupling 5 in this Example was observed. The reason was that the coupling 5 might generate excessive heat because the rotating member 6 was pressed against the coupling 5 for rotation of the generator 4. The maximum allowable temperature of the coupling 5 was 60°C. The observed surface temperature of the coupling 5 was 43°C after the lapse of one hour from the start of operation of the transport line, and was also 43°C after the lapse of two hours. Even thereafter, the surface temperature of the coupling 5 remained at the same value. No troubles occurred in the coupling 5, the rotating member 6 and the generator 4 during the use for a subsequent long period of time. The vibration detector 1, the computing unit 2 and the monitoring device 3 also continued stable operation during the long operation period. Thus, because the feed cables were simplified and batteries were no longer required, the requirements for maintenance, such as recharging of batteries, were reduced.

As described above, the invention can provide a bearing vibration diagnostic apparatus that is inexpensive and requires no external power supply.

## Claims

1. A bearing vibration diagnostic apparatus, comprising:
a vibration detector (1) that detects vibration of a bearing (10) supporting a rotary shaft (9);
a computing unit (2) that executes computation based on data detected by the vibration detector (1) and received as an input signal;
a monitoring device (3) that provides a vibration status of the bearing (10) based on an output signal from the computing unit (2);
a generator (4) that generates electric power using rotary motion of the rotary shaft (9) as a motive power source, and supplies the generated electric power to at least the computing unit (2) and the monitoring device (3); and
a motive power transmitting device that transmits the rotary motion of the rotary shaft (9) to the generator (4) to generate the electric power.

2. The bearing vibration diagnostic apparatus according to claim 1, wherein a roller (11) is mounted on the rotary shaft (9).

3. An apparatus for diagnosing vibration of a bearing (10), comprising:
a rotary shaft (9);
first and second bearings (10) supporting the rotary shaft (9) ;
a table roller (11) mounted on the rotary shaft (9);
a vibration detector (1) that detects vibration of the first bearing (10);
a computing unit (2) that executes computation based on data detected by the vibration detector (1) and received as an input signal;
a monitoring device (3) that provides a vibration status of the first bearing (10) based on an output signal from the computing unit (2);
a generator (4) that generates electric power using rotary motion of the rotary shaft (9) as a motive power source, and supplies the generated electric power to at least the computing unit (2) and the monitoring device (3); and
a motive power transmitting device that transmits the rotary motion of the rotary shaft (9) to the generator (4) to generate the electric power.

4. The apparatus according to any preceding claim, wherein the motive power transmitting device comprises:
a coupling (5) disposed on the rotary shaft (9) and having a rubber coating; and
a rotating member (6) on the generator (4) that rotatably contacts the rubber coating of the coupling (5).

5. The apparatus according to any of claims 1 to 3, wherein the motive power transmitting device comprises:
a coupling (5) disposed on the rotary shaft (9) and having a surface; and
a rotating member (6) on the generator (4), the rotating member (6) including a surface that rotatably contacts the surface of the coupling (5).

6. The apparatus according to claim 5, further comprising a rubber coating on at least one of the surface of the coupling (5) and the surface of the rotating member (6).

7. The apparatus according to any preceding claim, wherein the vibration detector (1) comprises a piezoelectric device that detects mechanical shock caused by wear of the bearing (10).

8. The apparatus according to any preceding claim, wherein the vibration detector (1) comprises an acceleration vibration sensor.

9. The apparatus according to any preceding claim, wherein the vibration detector (1) comprises a vibration sensor.

10. The apparatus according to any preceding claim, wherein the monitoring device (3) emits at least one of sound and light.

11. A method of diagnosing vibration of a bearing (10) using the bearing vibration diagnostic apparatus according to any preceding claim, comprising:
detecting vibration of the bearing (10) supporting the rotary shaft (9) using the vibration detector (1);
executing computation with the computing unit (2) based on data detected by the vibration detector (1) and received as the input signal;
providing from the monitoring device (3) the vibration status of the bearing (10) based on the output signal from the computing unit (2);
generating electric power with the generator (4) using rotary motion of the rotary shaft (9) as a motive power source, and supplying the generated electric power to at least the computing unit (2) and the monitoring device (3); and
transmitting the rotary motion of the rotary shaft (9) to the generator (4) to generate the electric power using the motive power transmitting device.
